# EUROPEAN PATENT APPLICATION

(11) **EP 1 323 461 A2**
(43) Date of publication of application: **02.07.2003**
(21) Application number: 02028087.1
(22) Date of filing: 17.12.2002
(51) Int. Cl.: B01D 61/02, B01D 61/08, B01D 63/12, B01D 65/02

(54) **Treatment system having spiral membrane element and method for operating the treatment system**

(30) Priority: 17.12.2001 JP 2001383506
(71) Applicant: NITTO DENKO CORPORATION, Osaka (JP)
(72) Inventor: Ando, Masaaki, Ibaraki-shi, Osaka (JP); Watanabe, Terutaka, Ibaraki-shi, Osaka (JP); Yoshikawa, Hiroshi, Ibaraki-shi, Osaka (JP)
(74) Representative: Grünecker, Kinkeldey, Stockmair & Schwanhäusser Anwaltssozietät

(57) **Abstract**

At the time of back washing of a treatment system, filtrate 2 is reverse-osmosis-filtrated by a reverse osmosis membrane separation device 51 so as to be separated into permeate 3 and concentrate 4. The concentrate 4 obtained from the reverse osmosis membrane separation device 51 is supplied as washing water into a spiral membrane element 10 through pipes 21 and 21a. On this occasion, the concentrate 4 is pressurized by a supply pump 104, so that a separation membrane is back-washed under a back pressure higher than 0.05 MPa but not higher than 0.3 MPa.

## Description

The present application is based on Japanese Patent Application No. 2001-383506, the entire contents of which are incorporated herein by reference.

### BACKGROUND OF THE INVENTION

### 1. Field of the Invention

The present invention relates to a treatment system having at least one spiral membrane element capable of being back-washed, and a method for operating the treatment system.

### 2. Related Art

A reserve osmosis membrane (RO membrane) separation device is used for desalting of seawater, production of ultrapure water, and so on. Coagulation, sedimentation and sand filtration is mainly performed as pre-treatment for the reserve osmosis membrane separation device. In the coagulation, sedimentation and sand filtration, treated water of stable quality cannot be supplied to the reserve osmosis membrane separation device because the quality of the treated water varies in accordance with the quality of raw water. For this reason, the capacity of the reserve osmosis membrane separation device is limited. On the other hand, a membrane separation technique has been recently developed to be adapted to the pre-treatment for the reserve osmosis membrane separation device, so that the membrane separation technique has been applied to the quality of water which was hardly treated heretofore.

When the membrane separation technique is adapted, as a substitute for the coagulation, sedimentation and sand filtration, to the pre-treatment for the reserve osmosis membrane separation device, suspended substances, colloidal substances or the like contained in raw water are deposited on a membrane surface of a separation membrane when the raw water is filtrated. As a result, the permeating speed of water through the separation membrane is reduced. Therefore, various kinds of washing processes are required in order to recover the permeating speed of water.

Physical washing is a typical washing process. Physical washing is classified into flushing washing and back washing.

Flushing washing is a process of pouring water onto the membrane surface at a high linear speed to thereby wash out substances deposited on the membrane surface by shear force generated in the membrane surface. Back washing is a process of performing washing by pouring water while applying back pressure to the membrane surface in a direction reverse to the direction used at the time of filtration.

When the membrane surface is stained with components which cannot-be removed by the aforementioned physical washing, chemical washing needs to be performed once a period of several days to several months. Chemical washing is a process of chemically removing dirt from the membrane surface by using various chemicals added to washing water as chemical washing liquid in the aforementioned back washing process.

In the various kinds of washing processes, however, there is a problem in recovery rate (the rate of the amount of permeate to the amount of raw water pumped up). Incidentally, the permeate is obtained from the reserve osmosis membrane separation device.

In flushing washing, because the washing water mainly used is raw water, the recovery rate decreases as the amount of raw water used as washing water for flushing washing increases.

The washing water used for back washing is filtrate obtained by a membrane separation method. Because the filtrate is used as pre-treated water for the reverse osmosis membrane separation device in a post-process, the recovery rate decreases as the amount of the filtrate used as washing water at the time of back washing increases. Incidentally, the amount of water used for physical washing is generally in a range of from about 5 % to about 10 % of the amount of permeate obtained from the reverse osmosis membrane separation device.

Also in chemical washing, because the filtrate is used as washing water, the recovery rate decreases as the amount of washing water used increases.

As described above, in the treatment system using the membrane separation method, the recovery rate is lowered when the membrane surface is physically washed. In addition, in any one of the aforementioned washing processes, filtration needs to be interrupted at the time of washing. Hence, when washing is made frequently, the amount of permeate obtained in a predetermined time is reduced.

Adaptation of the back washing to a spiral membrane element has been proposed, for example, in Japanese Patent Publication No. H06-98276B. When back pressure at back washing is applied to a separation membrane used in the related-art spiral membrane element, there is however fear that the separation membrane may be broken because the separation membrane has low strength against back pressure. According to this official gazette, it was therefore said that the spiral membrane element had better be back-washed under a low back pressure of 0.1 kg/cm² to 0.5 kg/cm² (0.01 MPa to 0.05 MPa).

According to the inventors' experiments, it was however impossible to keep the permeate flux high for a long time when the spiral membrane element was back-washed under the back pressure. As a result, it was impossible to make a stable operation.

### SUMMARY OF THE INVENTION

An object of the invention is to provide a treatment system in which the recovery rate can be kept high while the flux and quality of permeate are kept high and stable respectively for a long time, and a method for operating the treatment system.

Some of the inventors have already proposed a structure of a. separation membrane having a back pressure strength of not smaller than 2 kgf/cm², and a method for producing the separation membrane, in Japanese Patent Laid-Open No. JP-H10-225626A.

The inventor further has conceived an idea of adapting the separation membrane having such a back pressure strength to pre-treatment for a reverse osmosis membrane separation device, and has contrived the following invention to provide the configuration of a treatment system the most suitable for keeping the permeate flux high for a long time and obtaining a high recovery rate and to provide a method for operating the treatment system.

A treatment system according to the invention includes: a spiral membrane element including a porous hollow tube, and an envelope-like separation membrane wound on the outer circumferential surface of the porous hollow tube, the spiral membrane element capable of being back-washed under a back pressure higher than 0.05 MPa but not higher than 0.3 MPa; a reverse osmosis membrane separation device provided on a downstream side of the spiral membrane element; and a washing liquid supply system provided so that at least a part of permeated liquid or concentrated liquid obtained from the reverse osmosis membrane separation device at the time of filtration by the spiral membrane element is supplied as washing liquid to the spiral membrane element at the time of washing the spiral membrane element.

In the treatment system according to the invention, at least a part of permeated liquid or concentrated liquid obtained from the reverse osmosis membrane separation device at the time of filtration by the spiral membrane element is supplied as washing liquid to the spiral membrane element by the washing liquid supply system at the time of washing the spiral membrane element. Hence, even in the case where the spiral membrane element is washed, the recovery rate (the rate of the amount of permeated liquid to the amount of raw liquid. pumped up) is improved. Hence, a high recovery rate can be obtained while the flux and quality of permeated liquid are kept high and stable respectively for a long time.

The washing may include back washing, which is performed by the washing liquid supply system in such a manner that at least a part of the permeated liquid or concentrated liquid ejected from the reverse osmosis membrane separation device is supplied to the spiral membrane element under a pressure higher than 0.05 MPa but not higher than 0.3 MPa.

In this case, at the time of back washing, at least a part of the permeated liquid or concentrated liquid ejected from the reverse osmosis membrane separation device is supplied to the spiral membrane element under a pressure higher than 0.05 MPa but not higher than 0.3 MPa by the washing liquid supply system.

Hence, since the spiral membrane element can be back-washed under a back pressure higher than 0.05 MPa but not higher than 0.3 MPa, the washing effect in back washing is improved so that the flux and quality of permeated liquid can be kept high and stable respectively for a long time.

The washing may include flushing washing, which is performed by the washing liquid supply system in such a manner that at least a part of the permeated liquid or concentrated liquid ejected from the reverse osmosis membrane separation device is supplied to the spiral membrane element at the time of filtration by the spiral membrane element.

In this case, flushing washing is performed in such a manner that at least a part of the permeated liquid or concentrated liquid ejected from the reverse osmosis membrane separation device is supplied to the spiral membrane element at the time of filtration by the spiral membrane element. Hence, the spiral membrane element can be washed without interruption of filtration.

The washing liquid supply system may be provided so that at least a part of the permeated liquid or concentrated liquid ejected from the reverse osmosis membrane separation device is supplied, together with chemicals, to the spiral membrane element.

In this case, at least a part of the permeated liquid or concentrated liquid ejected from the reverse osmosis membrane separation device is supplied, together with chemicals, to the spiral membrane element by the washing liquid supply system. Hence, the effect of washing the spiral membrane element is improved more greatly.

The concentrated liquid or permeated liquid ejected from the reverse osmosis membrane separation device may have a residual pressure higher than 0.05 MPa but not higher than 0.3 MPa, so that the washing liquid supply system supplies at least a part of the concentrated liquid or permeated liquid to the spiral membrane element under the residual pressure at the time of the washing.

In this case, at the time of washing, at least a part of the concentrated liquid or permeated liquid ejected from the reverse osmosis membrane separation device is supplied to the spiral membrane element under the residual pressure higher than 0.05 MPa but not higher than 0.3 MPa. Hence, it is unnecessary to provide any exclusive washing liquid supply device for washing the spiral membrane element. Hence, both space saving and cost saving can be attained.

A plurality of spiral membrane elements as defined-above may be provided in parallel with one another, the spiral membrane elements being washed successively in such a manner that while one of the spiral membrane elements is washed, at least one of the other spiral membrane elements is operated for filtration; and the washing liquid supply system is provided so that at least a part of permeated liquid or concentrated liquid obtained from the reverse osmosis membrane separation device at the time of filtration by the plurality of spiral membrane elements is supplied as washing liquid to each spiral membrane element at the time of washing the spiral membrane element.

In this case, while one of the spiral membrane elements is washed, at least one of the other spiral membrane elements can be operated for filtration.

Hence, washing can be performed while the spiral membrane elements are continuously operated for filtration. As a result, the recovery rate is improved even in the case where the spiral membrane elements are washed. Hence, the flux and quality of permeated liquid can be kept high and stable respectively for a long time.

A method of operating a treatment system according to the invention is a method adapted to a treatment system including a spiral membrane element, and a reverse osmosis membrane separation device provided on a downstream side of the spiral membrane element, the spiral membrane element having a porous hollow tube, and an envelope-like separation membrane wound on the outer circumferential surface of the porous hollow tube, the spiral membrane element capable of being back-washed under a back pressure higher than 0.05 MPa but not higher than 0.3 MPa, the method including the step of supplying at least a part of permeated liquid or concentrated liquid obtained from the reverse osmosis membrane separation device at the time of filtration by the spiral membrane element, as washing liquid, to the spiral membrane element at the time of washing the spiral membrane element.

In the method of operating a treatment system according to the invention, at least a part of permeated liquid or concentrated liquid obtained from the reverse osmosis membrane separation device at the time of filtration by the spiral membrane element is supplied, as washing liquid, to the spiral membrane element at the time of washing the spiral membrane element. Hence, the recovery rate (the rate of the amount of permeated liquid to the amount of raw liquid pumped up) is improved even in the case where the spiral membrane element is washed. Hence, a high recovery rate can be obtained while the flux and quality of permeated liquid are kept high and stable respectively for a long time.

The washing may include back washing, which is performed in such a manner that at least a part of the permeated liquid or concentrated liquid ejected from the reverse osmosis membrane separation device is supplied to the spiral membrane element under a pressure higher than 0.05 MPa but not higher than 0.3 MPa.

In this case, at the time of back washing, at least a part of the permeated liquid or concentrated liquid ejected from the reverse osmosis membrane separation device is supplied to the spiral membrane element under a pressure higher than 0.05 MPa but not higher than 0.3 MPa.

Hence, since the spiral membrane element can be back-washed under a back pressure higher than 0.05 MPa but not higher than 0.3 MPa, the washing effect at back washing is improved so that the flux and quality of permeated liquid can be kept high and stable respectively for a long time.

The washing may include flushing washing, which is performed in such a manner that at least a part of the permeated liquid or concentrated liquid ejected from the reverse osmosis membrane separation device is supplied to the spiral membrane element at the time of filtration by the spiral membrane element.

In this case, flushing washing is performed in such a manner that at least a part of the permeated liquid or concentrated liquid ejected from the reverse osmosis membrane separation device is supplied to the spiral membrane element at the time of filtration by the spiral membrane element. Hence, the spiral membrane element can be washed without interruption of filtration.

At least a part of the permeated liquid or concentrated liquid ejected from the reverse osmosis membrane separation device maybe supplied, together with chemicals, to the spiral membrane element.

In this case, at least a part of the permeated liquid or concentrated liquid ejected from the reverse osmosis membrane separation device is supplied, together with chemicals, to the spiral membrane element. Hence, the effect of washing the spiral membrane element is improved more greatly.

The concentrated liquid or permeated liquid ejected from the reverse osmosis membrane separation device may have a residual pressure higher than 0.05 MPa but not higher than 0.3 MPa, so that at least a part of the concentrated liquid or permeated liquid is supplied to the spiral membrane element under the residual pressure at the time of the washing.

In this case, at the time of washing, at least a part of the concentrated liquid or permeated liquid ejected from the reverse osmosis membrane separation device is supplied to the spiral membrane element under the residual pressure higher than 0.05 MPa but not higher than 0.3 MPa. Hence, it is unnecessary to provide any exclusive washing liquid supply device for washing the spiral membrane element, so that both space saving and cost saving can be attained.

A plurality of spiral membrane elements as defined above may be provided in parallel with one another, the spiral membrane elements being washed successively in such a manner that while one of the spiral membrane elements is washed, at least one of the other spiral membrane elements is operated for filtration; and at least a part of permeated liquid or concentrated liquid obtained from the reverse osmosis membrane separation device at the time of filtration by the plurality of spiral membrane elements is supplied as washing liquid to each spiral membrane element at the time of washing the spiral membrane element.

In this case, while one of the spiral membrane elements is washed, at least one of the other spiral membrane elements can be operated for filtration.

Hence, washing can be performed while the spiral membrane elements are continuously operated for filtration. As. a result, the recovery rate is improved even in the case where the spiral membrane elements are washed. Hence, the flux and quality of permeated liquid can be kept high and stable respectively for a long time.

### BRIEF DESCRTPTION OF THE DRAWINGS

Fig. 1 is a typical configuration diagram showing an example of a membrane separation system according to a first embodiment of the invention;
Fig. 2A is a typical sectional view showing an example of a spiral membrane element provided in a spiral membrane module; and Fig. 2B is a partly cutaway perspective view of the spiral membrane element;
Fig. 3 is a typical sectional view showing a back washing operation in the spiral membrane module;
Fig. 4 is a typical configuration diagram showing a membrane separation system according to a second embodiment of the invention;
Fig. 5 is a typical configuration diagram showing a membrane separation system according to a third embodiment of the invention;
Fig. 6 is a sectional view of a separation membrane in the spiral membrane element provided in the spiral membrane module;
Fig. 7 is a typical configuration diagram showing a first comparative example; and
Fig. 8 is a typical configuration diagram showing a second comparative example.

### DERAILED DESCRIPTION OF THE PREFERRED EMBODIMENTS

A treatment system having a spiral membrane element according to the invention and a method for operating the treatment system will be described below.

### (First Embodiment)

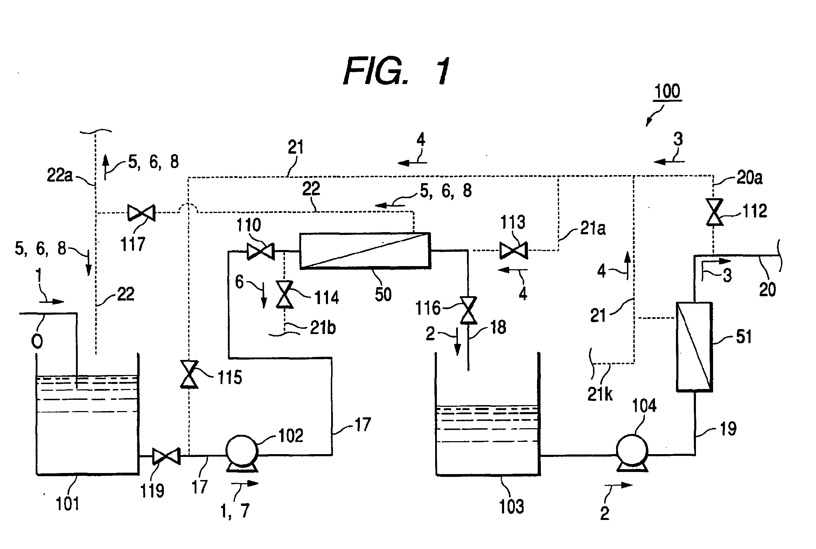

Fig. 1 is a typical configuration diagram showing a membrane separation system according to a first embodiment of the invention.

The membrane separation system 100 shown in Fig. 1 has a spiral membrane module 50 in a pre-stage, and a reverse osmosis membrane separation device 51 in a post-stage. A spiral membrane element 10 is provided in the spiral membrane module 50. The spiral membrane element 10 has a separation membrane which can be back-washed under a back pressure higher than 0.05 MPa but not higher than 0.3 MPa. A precision filtration membrane or an ultrafiltration membrane is used as the separation membrane.

At the time of filtration by the membrane separation system; valves 110 and 119 of a pipe 17, a valve 116 of a pipe 18 and a valve 117 of a pipe 22 are opened while a valve 115 of a pipe 21, a valve 112 of a pipe 20a, a valve 113 of a pipe 21a and a valve 114 of a pipe 21b are closed. Further, supply pumps 102 and 104 are actuated.

Incidentally, at the time of dead end filtration, the valve 117 of the pipe 22 is closed.

Raw water 1 such as river water stored in a reservoir tank 101 through a pipe 0 is given to the supply pump 102 through the valve 119 of the pipe 17 and pressurized by the supply pump 102, so that the pressurized raw water 1 is supplied to the spiral membrane module 50.

The spiral membrane module 50 separates the raw water 1 into filtrate 2 and concentrate 5 by a method which will be described later. The filtrate 2 obtained by the spiral membrane module 50 is supplied as pre-treated water to a reservoir tank 103 through the pipe 18. On the other hand, the concentrate 5 obtained by the spiral membrane module 50 is fully returned back to the reservoir tank 101 through the pipe 22. Alternatively, the concentrate 5 may be discharged to the outside of the system through a pipe 22a. Hence, at the time of dead end filtration, the raw water 1 fully becomes the filtrate 2.

The filtrate (pre-treated water) 2 obtained by the spiral membrane module 50 and stored in the reservoir tank 103 is given to the supply pump 104 through a pipe 19 and pressurized by the supply pump 104, so that the pressurized: filtrate 2 is supplied to the reverse osmosis membrane separation device 51. The reverse osmosis membrane separation device 51 separates the pre-treated water 2 into permeate 3 and concentrate 4. The permeate 3 obtained by the reverse osmosis membrane separation device 51 is supplied to the outside of the system through a pipe 20. The concentrate 4 obtained by the reverse osmosis membrane separation device 51 is discharged to the outside of the system through pipes 21 and 21k when the spiral membrane module 50 is operating. As occasion demands, a part of the concentrate 4 may be returned back to the pipe 17 through the pipe 21. Incidentally, at least a part of the permeate 3 may be supplied to the pipe 17 on the upstream side of the supply pump 102 through the pipes 20a and 21. In this case, it is however necessary to adjust pressure between the pipe 21 side and the pipe 20 side through the valve 112.

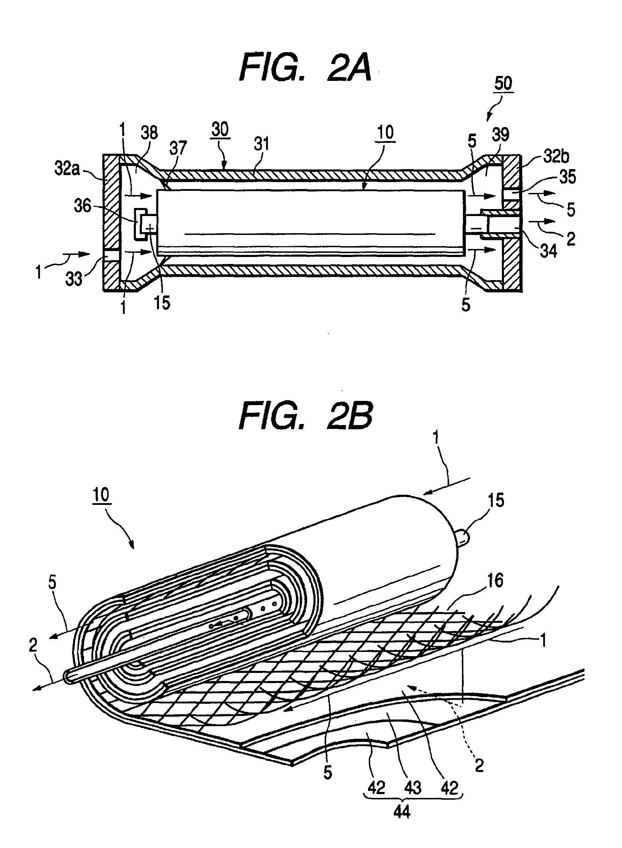

Fig. 2A is a typical sectional view showing an example of the spiral membrane module used in the membrane separation system depicted in Fig. 1. Fig. 2B is a partly cutaway perspective view of the spiral membrane element in the spiral membrane module depicted in Fig. 2A.

As shown in Fig. 2A, the spiral membrane module 50 has a pressure vessel (pressure-resistant vessel) 30, and a spiral membrane element 10 received in the pressure vessel 30. The pressure vessel 30 has a cylindrical casing 31, and a pair of end plates 32a and 32b. A raw water inlet 33 is formed in one end plate 32a whereas a concentrate outlet 35 is-formed in the other end plate 32b. A filtrate outlet 34 is further provided in the center portion of the other end plate 32b. The pipe 17 (Fig. 1) is connected to the raw water inlet 33. The pipe 18 (Fig. 1) is connected to the filtrate outlet 34. The pipe 22 (Fig. 1) is connected to the concentrate outlet 35. Incidentally, the structure of the pressure vessel is not limited to the structure shown in Fig. 2A. For example, a side-entry pressure vessel having a raw water inlet and a concentrate outlet provided in a cylindrical casing may be used.

The cylindrical casing 31 is filled with the spiral membrane element 10 in the condition that a packing 37 is mounted on a neighbor of one end portion of an outer circumferential surface of the spiral membrane element 10. Opposite open ends of the cylindrical casing 31 are sealed with the end plates 32a and 32b respectively. One open end of a water collection tube 15 in the spiral membrane element 10 is fitted into the filtrate outlet 34 of the end plate 32b. An end cap 36 is put on the other open end of the water collection tube 15. The inside space of the pressure vessel 30 is partitioned into a first liquid chamber 38 and a second liquid chamber 39 by the packing 37. In this manner, the spiral membrane element 10 is received in the pressure vessel 30.

As shown in Fig. 2B, the spiral membrane element 10 is formed as follows. In the condition that a filtrate spacer 43 made of a synthetic resin net is wrapped in two separation membranes 42, the two separation membranes 42 are bonded onto opposite surfaces of the filtrate spacer 43 at three sides to thereby form an envelope-like membrane (pouch-like membrane) 44. An open portion of the envelope-like membrane 44 is attached to the water collection tube 15. The envelope-like membrane 44 is spirally wound, together with a raw water spacer 16 made of a synthetic resin net, on an outer circumferential surface of the water collection tube 15. In this manner, the spiral membrane element 10 is formed. The outer circumferential surface of the spiral membrane element 10 is coated with a sheathing material. The structure of each separation membrane 42 will be described later.

At the time of filtration by the membrane separation system, as shown in Fig. 2A, raw water 1 given through the pipe 17 (Fig. 1) is led into the first liquid chamber 38 of the pressure vessel 30 through the raw water inlet 33. The raw water 1 is further supplied to the inside of the spiral membrane element 10 through one end portion of the spiral membrane element 10. The raw water 1 flows straightly in a direction parallel with the collection pipe 15 along the raw water spacer 16 as shown in Fig. 2B, so that concentrate 5 is ejected from the other end surface side of the spiral membrane element 10 into the second liquid chamber 39.

Then, the concentrate 5 is discharged from the concentrate outlet 35 to the outside of the pressure vessel 30 through the pipe 22 (Fig. 1). Further, as shown in Fig. 2B, a part of the raw water 1 permeates through each separation membrane 42 on the basis of the pressure difference between the raw water side and the filtrate side in the process in which the raw water 1 flows along the raw water spacer 16, so that filtrate 2 flows into the water collection tube 15 along the filtrate spacer 43 and is discharged from the open end of the water collection tube 15. The filtrate 2 is further taken out of the pressure vessel 30 from the filtrate outlet 34 shown in Fig. 2A through the pipe 18 (Fig. 1).

Incidentally, at the time of dead end filtration by the membrane separation system 100, the concentrate 5 is not discharged to the outside because the raw water 1 fully permeates through each separation membrane 42. That is, only the filtrate 2 is taken out of the pressure vessel 30 from the filtrate outlet 34 shown in Fig. 2A through the pipe 18 (Fig. 1).

Contaminants contained in the raw water 1 are removed by the pre-treatment using the spiral membrane module 50. Hence, pre-treated water 2 after removal of such contaminants is supplied to the reverse osmosis membrane separation device 51. Incidentally, the internal structure of the reverse osmosis membrane separation device 51 is the same as the internal structure of the spiral membrane module 50 except difference in separation membrane.

At the time of filtration by the membrane separation system 100, suspended substances, colloidal substances or dissolved substances contained in the raw water 1 are deposited as contaminants on membrane surfaces of the separation membranes 42 of the spiral membrane element 10 in the process of filtration by the spiral membrane module 50. In this case, sedimentation of contaminants on membrane surfaces in the spiral membrane module 50 directly supplied with raw water 1 containing contaminants is more remarkable than that in the reverse osmosis membrane separation device 51 supplied with pre-treated water 2 after removal of contaminants because the load imposed on the membrane surfaces in the spiral membrane module 50 is larger than that in the reverse osmosis membrane separation device 51. Therefore, in the membrane separation system 100, after the filtrating operation is carried out for a predetermined time, the membrane surfaces in the spiral membrane element 10 are washed.

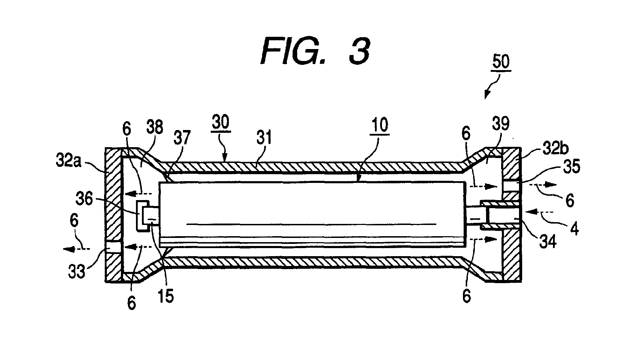

As described above, washing of the membrane surfaces is classified into physical washing and chemical washing. Back washing which is one physical washing method will be described below with reference to Figs. 1 and 3.

In the membrane separation system 100, at the time of back washing of the spiral membrane module 50, the valve 113 of the pipe 21a and the valve 114 of the pipe 21b are opened while the valves 110 and 119 of the pipe 17, the valve 112 of the pipe 20a, the valve 115 of the pipe 21, the valve 116 of the pipe 18 and the valve 117 of the pipe 22 are closed. Further, the supply pump 102 is stopped and the supply pump 104 is actuated. Assume now that an amount of pre-treated water 2 sufficient to back-wash the spiral membrane element 10 is stored in the reservoir tank 103.

As a result, the pre-treated water 2 stored in the reservoir tank 103, that is, the filtrate 2 from the spiral membrane element 10 is given to the supply pump 104 through the pipe 19 and pressurized by the supply pump 104, so that the pressurized filtrate 2 is supplied to the reverse osmosis membrane separation device 51. In the reverse osmosis membrane separation device 51, the filtrate 2 is reverse-osmosis-filtrated so as to be separated into permeate 3 and concentrate 4. The permeate 3 obtained by the reverse osmosis membrane separation device 51 is supplied to the outside of the system through the pipe 20 in the same manner as in the filtrating operation. A part of the concentrate 4 obtained by the reverse osmosis membrane separation device 51 is supplied as washing liquid to the spiral membrane element 10 through the pipes 21 and 21a. A part of the concentrate 4 unnecessary for washing of the spiral membrane element 10 is discharged to the outside of the system through the pipes 21 and 21k. On this occasion, the concentrate 4 has a pressure higher than 0.05 MPa but not higher than 0.3 MPa because the concentrate 4 is pressurized by the supply pump 104.

The membrane surfaces in the spiral membrane element 10 are washed with the concentrate 4, so that the concentrate 4 changes to washing drain 6. The washing drain 6 is ejected from the raw water inlet 33 of the spiral membrane module 50 through a part of the pipe 17 and the pipe 21b.

Fig. 3 is a typical sectional view showing a back washing operation in the spiral membrane module 50.

As shown in Fig. 3, at the time of back washing of the spiral membrane module 50, the concentrate 4 supplied through the pipe 21a and a part of the pipe 18 is led into the water collection tube 15 through the filtrate outlet 34. The concentrate 4 is led out of the outer circumferential surface of the water collection tube 15 to the inside of the separation membranes 42 and permeates through the separation membranes 42 in. a direction reverse to the direction used at the time of filtration. On this occasion, contaminants deposited on the membrane surfaces of the separation membranes 42 are separated from the separation membranes 42.

Since the outer circumferential surface of the spiral membrane element 10 is coated with a sheathing material, the concentrate 4 permeating through the separation membranes 42 flows axially in the inside of the spiral membrane element 10 along the raw water spacer 16 and is discharged as washing drain 6 from opposite end portions of the spiral membrane element 10 into the first and second liquid chambers 38 and 39. As shown in Fig. 1, when the washing drain 6 is discharged into the first liquid chamber 38, the washing drain 6 is ejected from the raw water inlet 33 to the outside of the system through a part of the pipe 17 and the pipe 21b.

On the other hand, when the washing drain 6 is discharged into the second liquid chamber 39, all or a part of the washing drain 6 is returned from the concentrate outlet 35 back to the reservoir tank 101 through the pipe 22. At the time of back washing in this embodiment, however, the washing drain 6 is not ejected from the concentrate outlet 35 but ejected from the raw water inlet 33 because the valve 117 of the pipe 22 is closed as described above. Incidentally, at least a part of the raw water taken out from the raw water inlet 33 may be returned back to the reservoir tank 101.

Here, the raw water inlet 33 side pressure, the filtrate outlet 34 side pressure and the concentrate outlet 35 side pressure are set so that a back pressure higher than 0.05 MPa but not higher than 0.3 MPa is applied to the separation membranes 42. Hence, a required amount of the concentrate 4 can be poured in a short time so that contaminants deposited on the membrane surfaces of the separation membranes 42 in the spiral membrane element 10 can be removed effectively. Hence, in the spiral membrane module 50, filtration can be performed stably for a long time without reduction in permeate flux and without deterioration in filtrate quality. As described above, in the membrane separation system 100, pre-treated water (filtrate) 2 stable in quantity and quality can be obtained by the filtrating operation of the spiral membrane module 50.

In these cases, flushing washing which will be described later is performed after back washing of the spiral membrane module 50. After flushing washing, the filtrating operation is carried out. Hence, raw water 1 flows axially in the inside of the spiral membrane element 10 toward the other end portion of the spiral membrane module 50. Contaminants separated from the separation membranes 42 are washed away from one end portion of the spiral membrane module 50 to the other end portion thereof by the raw water 1. The contaminants are discharged together with the concentrate 4 from the other end portion of the spiral membrane module 50 into the second liquid chamber 39 and taken out of the pressure vessel 30 through the concentrate outlet 35. All or a part of the raw water taken out through the concentrate outlet 35 may be returned back to the reservoir tank 101 through the pipe 22. Incidentally, at the time of dead end filtration, the concentrate 4 is not discharged to the outside.

Hence, the contaminants separated from the separation membranes 42 are prevented from being deposited on the separation membranes 42 again. Hence, in the spiral membrane module 50, a stabler filtrating operation can be carried out for a long time without reduction in permeate flux and without deterioration in filtrate quality.

In the membrane separation system 100, the concentrate 4 obtained from the reverse osmosis membrane separation device 51 is used as washing water because the membrane separation system 100 aims at obtaining the permeate 3. If the membrane separation system 100 aims at obtaining the concentrate 4, the permeate 3 may be used as washing water in the condition that the valve 112 of the pipe 20a is opened. Incidentally, in this case, the permeate 3 is led into the pipe 21 through the pipe 20a and then supplied as washing water into the spiral membrane element 10 in the same course as that of the concentrate 4. The washing operation is the same as at the time of back washing with the concentrate 4.

At the time of back washing of the membrane separation system 100, the filtrating operation of the spiral membrane module 50 is stopped but the filtrating operation of the reverse osmosis membrane separation device 51 is continued. At the time of back washing, however, an amount of pre-treated water sufficient to perform the filtrating operation continuously during the back washing must be stored in the reservoir tank 103 in advance.

Next, flushing washing which is another physical washing method will be described with reference to Figs. 1 and 3.

At the time of flushing washing of the membrane separation system 10.0 shown in Fig. 1, the opening/closing condition of the valves and the actuating condition of the supply pumps to constitute the membrane separation system 100 are the same as those at the time of filtration except that the valve 119 of the pipe 17 and the valve 16 of the pipe 18 are closed. That is, the valve 110 of the pipe 17, the valve 115 of the pipe 21 and the valve 117 of the pipe 22 are opened while the valve 119 of the pipe 17, the valve 116 of the pipe 18, the valve 112 of the pipe 20a, the valve 113 of the pipe 21a and the valve 114 of the pipe 21b are closed. Further, the supply pumps 102 and 104 are actuated.

In this case, concentrate 4 obtained by the reverse osmosis membrane separation device 51 in the process of filtration by the membrane separation system 100 is not discharged to the outside of the system but supplied as flushing washing water 7 to the pipe 17 on the upstream side of the supply pump'102 through the pipe 21. The flushing washing water 7 is given to the supply pump 102 through the pipe 1.7 and led into the raw water inlet 33 of the pressure vessel 30 by the supply pump 102. In the inside of the pressure vessel 30, the flushing washing water 7 is led into the separation membranes of the spiral membrane element 10 in the same manner as the flow of raw water 1 at the time of filtration. Here, the flushing washing water 7 flows in the inside of the separation membranes at a high linear speed. Dirt on the membrane surfaces of the separation membranes is washed away by shear force generated between each separation membrane and the flushing washing water 7 on the basis of the high-linear-speed flux of the flushing washing water 7. Hence, the flushing washing water 7 used for washing is discharged as washing drain 8 to the outside of the system through the concentrate outlet 35 and the pipes 22 and 22a.

At the time of flushing washing of the membrane separation system 100, the respective filtrating operations of the spiral membrane module 50 and the reverse osmosis membrane separation device 51 are continued.

Finally, chemical washing of the membrane separation system 100 according to this embodiment will be described.

Chemical washing is performed once a period of several days to several months when components of dirt on the membrane surfaces in the spiral membrane element 10 cannot be removed sufficiently by physical washing. Chemical washing is a washing method using chemicals for chemically removing dirt from the membrane surfaces.

In the membrane separation system 100 according to this embodiment, chemical washing of the membrane separation system 100 is performed in the same operating manner as the filtration and back washing except the following point.

In chemical washing of the membrane separation system 100, chemicals added to the concentrate 4 or permeate 3 obtained from the reverse osmosis membrane separation device 51 are used as washing water. Here, the washing water for chemical washing is produced by supply of predetermined chemicals from the outside of the system through a predetermined pipe.

The concentrate 4 or permeate 3 containing such chemicals is led as chemical washing water into the spiral membrane module 50, so that the membrane surfaces are washed with the chemical washing water.

At the time of production of the chemical washing water, it is necessary to pay attention to adjustment of the hydrogen ion concentration. This is because precipitation of salt may occur in the hydrogen ion concentration reaching saturated solubility when, for example, dirt containing components such as calcium carbonate is washed away because the solubility of calcium carbonate decreases as the hydrogen ion concentration of the washing water increases. In such a case, the hydrogen ion concentration is adjusted so that precipitation of salt can be avoided.

As described above, in the membrane separation system according to this embodiment, washing water used for various kinds of washing is the concentrate 4 or permeate 3 obtained from the reverse osmosis membrane separation device 51. That is, in the membrane separation system 100 according to this embodiment, the recovery rate (the rate of the amount of permeate 3 to the amount of raw water 1 pumped up) is improved because all of raw water can be passed through the reverse osmosis membrane separation device 51.

Moreover, because the concentrate 4 obtained from the reverse osmosis membrane separation device 51 is used for washing, the residual pressure which is generated in the concentrate 4 by the supply pump 104 always actuated and which is higher than 0.05 MPa but not higher than 0.3 MPa is used so that washing water can be led into the spiral membrane module 50. Hence, it is unnecessary to provide any pump exclusively for washing liquid supply. That is, it is unnecessary to prepare any space for setting the pump. In addition, it becomes possible to operate an efficient and economical membrane permeation system.

In this embodiment, supply pumps may be provided in the pipes 20a and 21a respectively as occasion demands.

### (Second Embodiment).

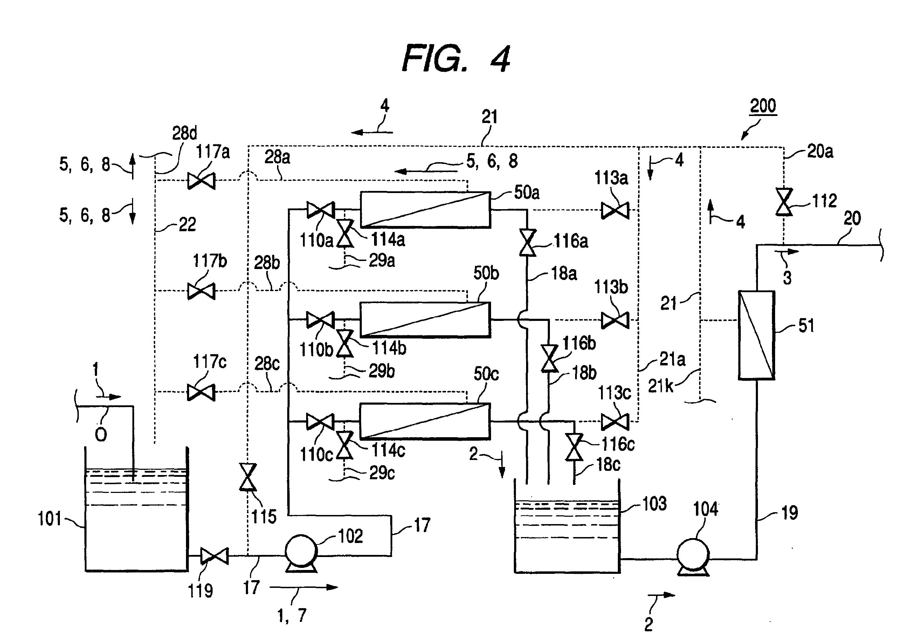

Fig. 4 is a typical configuration diagram showing a membrane separation system according to a second embodiment of the invention.

The membrane separation system 200 according to this embodiment has a structure different from that of the membrane separation system 100 according to the first embodiment in the following point.

In the membrane separation system 200 according to this embodiment, three spiral membrane modules 50a, 50b and 50c are provided in parallel with one another. The structure of each of the spiral membrane modules 50a, 50b and 50c is the same as that of the spiral membrane module 50.

At the time of filtration by the membrane separation system 200 according to this embodiment, valves 110a, 110b, 110c and 119 of a pipe 17, a valve 116a of a pipe 18a, a valve 116b of a pipe 18b, a valve 116c of a pipe 18c, a valve 117a of a pipe 28a, a valve 117b of a pipe 28b and a valve 117c of a pipe 28c are opened while valves 113a, 113b and 113c of a pipe 21a, a valve 114a of a pipe 29a, a valve 114b of a pipe 29b and a valve 114c of a pipe 29c are closed. The opening/closing state of the other valves and the operating state of the supply pumps are the same as in the first embodiment.

Incidentally, at the time of dead end filtration, the valve 117a of the pipe 28a, the valve 117b of the pipe 28b and the valve 117c of the pipe 28c are closed.

At the time of filtration by the membrane separation system 200, each of the three spiral membrane modules 50a, 50b and 50c operates in the same manner as the spiral membrane module 50 operates at the time of filtration in the first embodiment.

Raw water 1 such as river water stored in a reservoir tank 101 through a pipe 0 is given to a supply pump 102 through the pipe 17 and pressurized by the supply pump 102, so that the pressurized raw water 1 is supplied to the spiral membrane modules 50a/ 50b and 50c.

At the time of filtration, each of the spiral membrane modules 50a, 50b and 50c separates the raw water 1 into filtrate 2 and concentrate 5 in the same manner as the spiral membrane module 50 in the first embodiment. The filtrate 2 obtained by the spiral membrane modules 50a, 50b and 50c is supplied as pre-treated water to a reservoir tank 103 through the pipes 18a, 18b and 18c. On the other hand, the concentrate 5 obtained by the spiral membrane modules 50a, 50b and 50c is returned back to the reservoir tank 101 through the pipes 28a, 28b and 28c. Alternatively, the concentrate 5 may be discharged to the outside of the system through a pipe 28d. The filtration process bywhich the pre-treated water 2 stored in the reservoir tank 103 is further separated into concentrate 4 and permeate 3 is the same as in the membrane separation system 100 according to the first embodiment.

At the time of dead end filtration by the spiral membrane modules 50a, 50b and 50c, all of the raw water 1 forms filtrate 2 by the spiral membrane modules 50a, 50b and 50c.

Next, back washing will'be described. In the membrane separation system 200, the spiral membrane modules 50a, 50b and 50c are back-washed successively. That is, while the spiral membrane module 50a is back-washed, the spiral membrane modules 50b and 50c are continuously operated for filtration. Similarly, while the spiral membrane module 50b is back-washed, the spiral membrane modules 50a and 50c are continuously operated for filtration. Similarly, while the spiral membrane module 50c is back-washed, the spiral membrane modules 50a and 50b are continuously operated for filtration.

When, for example, the spiral membrane module 50a is to be back-washed at the time of filtration by the spiral membrane modules 50b and 50c, the valve 113a of the pipe 21a and the valve 114a of the pipe 29a are opened while the valve 110a of the pipe 17, the valve 116a of the pipe 18a and the valve 117a of the pipe 28a are closed. As a result, in the membrane separation system 200, the spiral membrane module 50a is back-washed while filtration is performed by the spiral membrane modules 50b and 50c and the reverse osmosis membrane separation device 51. Each of the spiral membrane modules 50b and 50c can be back-washed in the same manner as the spiral membrane module 50a.

Next, flushing washing which is another physical washing method will be described. In the membrane separation system 200, the spiral membrane modules 50a, 50b and 50c are flushing-washed simultaneously. That is, filtration by the spiral membrane modules 50a, 50b and 50c and the reverse osmosis membrane separation device 51 is continued during flushing washing.

At the time of flushing washing, the operating condition of the valves and supply pumps is the same as at the time of filtration by the spiral membrane modules 50a, 50b and 50c except that the valve 119 of the pipe 17, the valve 116a of the pipe 18a, the valve 116b of the pipe 18b and the valve 116c of the pipe 18c are closed.

Finally, chemical washing in the membrane separation system 200 according to this embodiment will be described.

Chemical washing of the membrane separation system 200 is performed in the same operating manner as the back washing except the following point.

In the membrane separation system 200, each of the spiral membrane modules 50a, 50b and 50c is chemically washed in the same manner as at the time of chemical washing of the spiral membrane module 50 in the membrane separation system 100 in the first embodiment. That is, chemical washing is performed in the same manner as the back washing except that chemicals added to the concentrate 4 or permeate 3 obtained from the reverse osmosis membrane separation device 51 are used as washing water. Here, washing water for chemical washing is produced by supply of predetermined chemicals from the outside of the system through a predetermined pipe.

The concentrate 4 or permeate 3 containing such chemicals is led as chemical washing water into each of the spiral membrane modules 50a, 50b and 50c, so that each of the spiral membrane modules 50a, 50b and 50c is washed.

As described above, in the membrane separation system 200 according to the invention, the three spiral membrane modules 50a, 50b and 50c are washed successively. Hence, washing is performed without interruption of filtration. Moreover, all of raw water is filtrated by the reverse osmosis membrane separation device 51 regardless of washing. Hence, the recovery rate is improved.

Since the concentrate 4 obtained from the reverse osmosis membrane separation device 51 is used for washing, the residual pressure which is generated in the concentrate 4 by the supply pump 104 always actuated and which is higher than 0.05 MPa but not higher than 0.3 MPa is used so that washing liquid can be led into the spiral membrane modules 50a, 50b and 50c. Hence, it is unnecessary to provide any pump exclusively for washing liquid. That is, it is unnecessary to provide any space for setting the pump. In addition, it becomes possible to operate an efficient and economical membrane permeation system.

### (Third Embodiment)

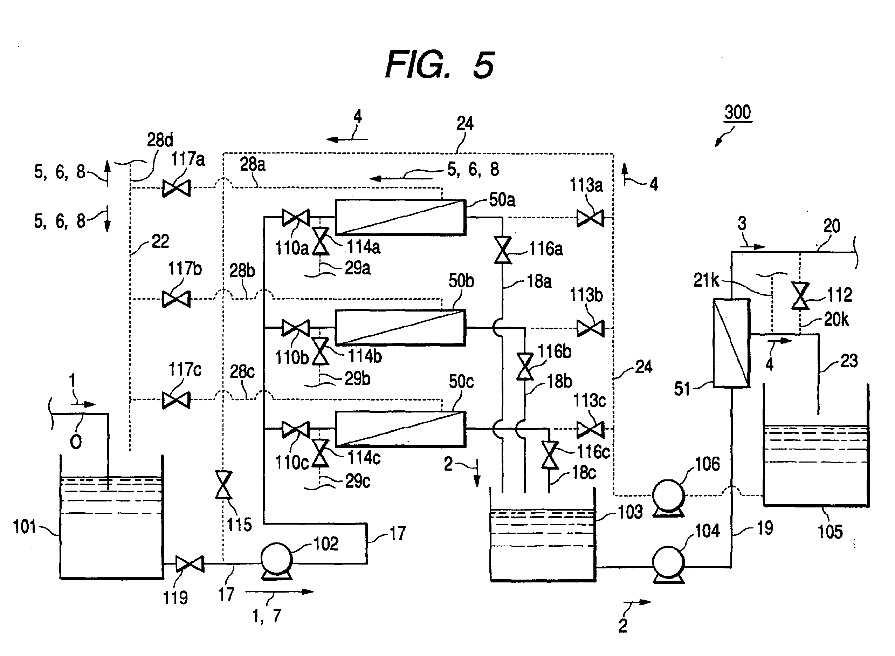

Fig. 5 is a typical configuration diagram showing a membrane separation system according to a third embodiment of the invention.

The membrane separation system 300 according to this embodiment has a structure different from that of the membrane. separation system 200 according to the second embodiment in the following point.

In the membrane separation system 300 according to this embodiment, membrane surfaces in the spiral membrane modules 50a, 50b and 50c are washed with concentrate 4 stored in a reservoir tank 105. Therefore, a pipe 23 for supplying the concentrate 4 to the reservoir tank 105 is provided in the reverse osmosis membrane separation device 51. Further, a pipe 24 for supplying the concentrate 4, as washing water, stored in the reservoir tank 105 into the spiral membrane modules 50a, 50b and 50c or the pipe 17 is connected to the reservoir tank 105. The pipe 24 is equivalent to the pipe 21 (Fig. 4) in the second embodiment. A supply pump 106 is provided in the pipe 24 so that the washing water is supplied.

At the time of filtration by the membrane separation system 300 shown in Fig. 5, the same operation as the operation in the second embodiment is carried out except the following point. Incidentally, filtration is performed by all the spiral membrane modules 50a, 50b and 50c and the reverse osmosis membrane separation device 51.

At the time of filtration by the membrane separation system 300, a valve 115 of the pipe 24 is closed while the supply pump 106 provided in the pump 106 stops.

Filtration is performed by the spiral membrane modules 50a, 50b and 50c and the reverse osmosis membrane separation device 51. The operation for filtration is the same as in the second embodiment.

The concentrate 4 separated by the reverse osmosis membrane separation device 51 is stored in the reservoir tank 105 through the pipe 23. The stored concentrate 4 is used as washing water with which the membrane surfaces in the spiral membrane modules 50a, 50b and 50c are washed. Therefore, at the time of filtration, the concentrate 4 is always stored. Incidentally, at the time of filtration, the concentrate 4 stored in the reservoir tank 105 may be supplied to the pipe 17 in the condition that the valve 115 of the pipe 24 is opened while the supply pump 106 is actuated.

Next, the operation of the membrane separation system 300 at the time of back washing will be described. In the membrane separation system 300, the spiral membrane modules 50a, 50b and 50c are back-washed successively in the same manner as in the second embodiment.

The operation of each of the spiral membrane modules 50a, 50b and 50c in this embodiment is the same as that of each of the spiral membrane modules 50a, 50b and 50c in the second embodiment.

When the spiral membrane module 50a is back-washed, the valve 116a of the pipe 18a and the valve 110a of the pipe 17 are closed while the valve 113a of the pipe 24 and the valve 114 of the pipe 29a are opened. Further, the supply pump 106 in the pipe 24 is actuated. The opening/closing condition of the other valves and the actuating condition of the other pumps are the same as those at the time of filtration by the spiral membrane modules 50a, 50b and 50c. Incidentally, in this case, the supply pump 106 pressurizes washing water for back washing so that a back pressure higher than 0.05 MPa but not higher than 0.3 MPa is applied to each membrane surface in the spiral membrane module 50a.

In this condition, the concentrate 4 stored in the reservoir tank 105 is led as washing water into the spiral membrane module 50a through the valve 113a of the pipe 24 by the supply pump 106. The washing operation in the spiral membrane element 10 of the spiral membrane module 50a is the same as that in the spiral membrane element 10 in the first embodiment.

Further, the spiral membrane modules 50b and 50c are back-washed successively in the same manner as the spiral membrane module 50a is back-washed.

In the membrane separation system 300, the concentrate 4 obtained from the reverse osmosis membrane separation device 51 is used as washing water because the membrane separation system 300 aims at obtaining the permeate 3. If the membrane separation system 300 aims at obtaining the concentrate 4, the permeate 3 may be used as washing water in the condition that the valve 112 of the pipe 20k is opened so that the permeate 3 is stored in the reservoir tank 105. Incidentally, in the case, the permeate 3 is supplied to the spiral membrane modules 50a, 50b and 50c to be back-washed, through the pipe 24 by the supply pump 106. The washing operation based on use of the permeate 3 in the spiral membrane modules 50a, 50b and 50c is the same as the washing operation based on use of the concentrate 4.

If the membrane separation system 300 aims at obtaining the concentrate 4 as described above, the concentrate 4 is supplied to the outside of the system through the pipes 23 and 21k.

At the time of flushing washing, the valve 115 of the pipe 24 is opened, the valve 119 of the pipe 17 is closed, and the supply pump 106 of the pipe 24 is actuated. The operating condition of the other valves and pumps is the same as at the time of filtration by the spiral membrane modules 50a, 50b and 50c.

In flushing washing, the three spiral membrane modules can be washed individually when any of the valves 110a, 110b and 110c of the pipe 17 is closed. Assume now that the spiral membrane modules 50a, 50b and 50c are washed simultaneously.

Flushing washing in this embodiment is different from that in the second embodiment in the method of supplying washing water. The concentrate 4 obtained from the reverse osmosis membrane separation device 51 is stored in the reservoir tank 105 and then supplied as flushing washing water 7 to the pipe 17 by the supply pump 106 of the pipe 24 at the time of flushing washing. The flushing washing water 7 supplied thus is led into each of the spiral membrane modules 50a, 50b and 50c by the supply pump 102 in the pipe 17. The flushing washing operation is the same as the flushing washing operation of the spiral membrane element 10 in the first embodiment.

Finally, chemical washing in the membrane separation system 300 according to this embodiment will be described.

At the time of chemical washing in the membrane separation system 300, the same chemical washing operation as in the second embodiment is performed except that the concentrate 4 stored in the reservoir tank 105 is used as washing water.

As described above, in the membrane separation system 300 according to this embodiment, the three spiral membrane modules 50a, 50b and 50c are washed successively. Hence, washing is performed without interruption of filtration. In addition, all of raw water is filtrated by the reverse osmosis membrane separation device 51 regardless of the washing, so that.the recovery rate is improved.

The membrane separation system 300 according to the third embodiment has a plurality of spiral membrane elements. While the selected spiral membrane element is washed, the other spiral membrane elements can be operated for filtration. Hence, filtration can be performed stably for a long time, so that. the permeate can be always produced.

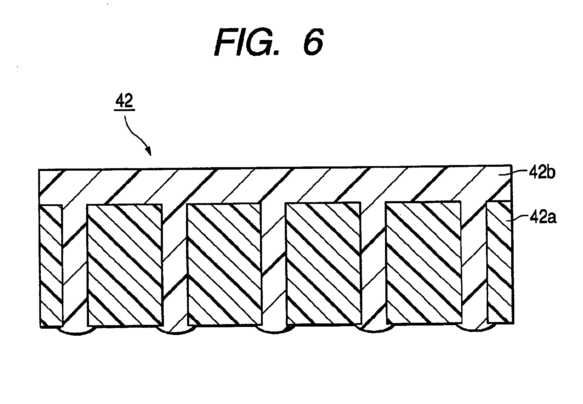

Fig. 6 is a sectional view of a separation membrane in the spiral membrane element 10.

As shown in Fig. 6, the separation membrane 42 of the spiral membrane element 10 has a porous reinforcing sheet (porous sheet material) 42a, and a permeable membrane body 42b having a substantially separating function and integrally adhering to a surface of the porous reinforcing sheet 42a.

The permeable membrane body 42b is made of one member selected from the group consisting of: polyvinylidene fluoride (PVDF) ; one kind of polysulfone-based resin; a mixture of two or more kinds of polysulfone-based resin; and a copolymer or mixture of polysulfone-based resin and a polymer such as polyimide or fluorine-containing polyimide resin.

The porous reinforcing sheet 42a is made of a sheet of woven fabric, a sheet of unwoven fabric, a mesh net, a foamed sintered sheet or the like, using polyester, polypropylene, polyethylene, polyamide or the like as a raw material. Particularly, a sheet of unwoven fabric is preferably used in terms of film-formability and cost.

The porous reinforcing sheet 42a and the permeable membrane body 42b are bonded to each other in an anchoring state in which each of pores in the porous reinforcing sheet 42a is filled with a part of the resin component constituting the permeable membrane body 42b.

The back pressure strength of the separation membrane 42 backed with the porous reinforcing sheet 42a is improved to a value higher than 0.2 MPa, that is, a value ranging from about 0.4 MPa to about 0.5 MPa. Incidentally, a method for defining the back pressure strength will be described later.

In order to obtain a back pressure strength of not lower than 0.2 MPa in use of a sheet of unwoven fabric as the porous reinforcing sheet 42a, it is preferable that the sheet of unwoven fabric has a thickness of 0.08 mm to 0.15 mm and a density of 0.5 g/cm³ to 0.8 g/cm³. If the thickness is smaller than 0.08 mm or the density is lower than 0.5 g/cm³, the sufficient strength of the reinforcing sheet cannot be obtained so that it is difficult to keep the back pressure strength of the separation membrane 42 at a value of not smaller than 0.2 MPa. On the other hand, if the thickness is larger than 0.15 mm or the density is higher than 0.8 g/cm³, peeling occurs easily in the interface between the permeable membrane body 42b and the unwoven fabric because the filtration resistance of the porous reinforcing sheet 42a becomes high or the anchoring effect into the unwoven fabric (porous reinforcing sheet 42a) becomes low.

Next, a method of producing the separation membrane 42 will be described. First, a solvent, a non-solvent and a swelling agent are added into a polysulfone-based resin and heated and dissolved in the polysulfone-based resin to thereby prepare a homogeneous film-forming solution. Here, the polysulfone-based resin is not particularly limited if it has at least one (-SO₂-) portion in a molecular structure as represented by the following structural formula C-1.

### (C-1)

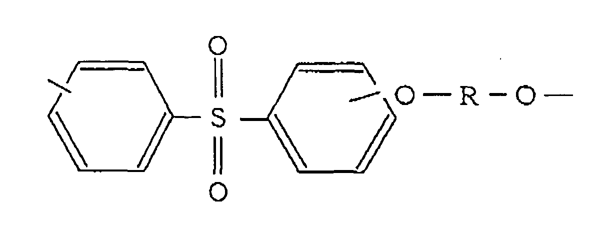

In the structural formula C-1, R is a bivalent aromatic, alicyclic or aliphatic hydrocarbon group or a bivalent organic group containing such hydrocarbon groups bonded by a bivalent organic bond group.

Preferably, there is used one of polysulfone-based resins represented by the following structural formulae C-2 to C-4.

### (C-2)

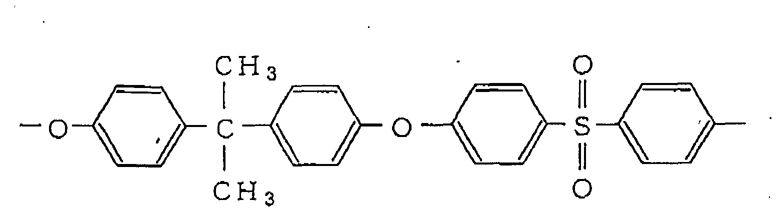

### (C-3)

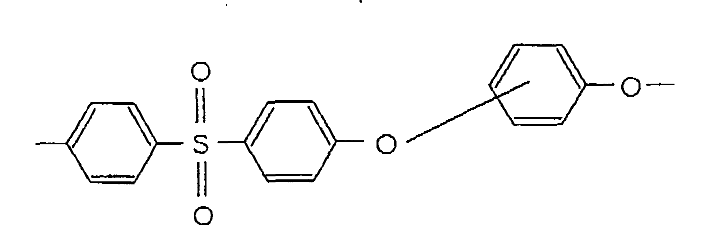

### (C-4)

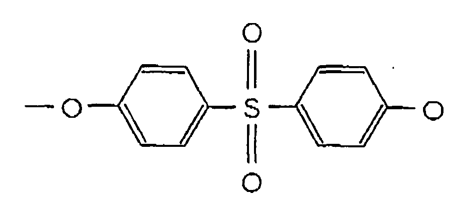

Examples of the material preferably used as the solvent for polysulfone are N-methyl-2-pyrolidone, dimethyl formamide, dimethyl acetoamide, dimethyl sulfoxide, etc. Examples of the material preferably used as the non-solvent are: aliphatic polyvalent alcohol such as ethylene glycol, diethylene glycol, propylene glycol, polyethylene glycol, and glycerol; lower aliphatic alcohol such as methanol, ethanol, and isopropyl alcohol; and lower aliphatic ketone such as methyl ethyl ketone.

The non-solvent content of the mixture solvent containing the solvent and the non-solvent is not particularly limited if the obtained mixture solvent is homogeneous. Generally, the non-solvent content is selected to be.in a range of from 5 % by weight to 50 % by weight, preferably in a range of from 20 % by weight to 45 % by weight.

Examples of the swelling agent used for accelerating or controlling the formation of a porous structure are: metal salt such as lithium chloride, sodium chloride, and lithium nitrate; a water-soluble high-molecular compound or its metal salt such as polyethylene glycol, polyvinyl alcohol, polyvinyl pyrolidone, and polyacrylate; and formamide. The swelling agent content of the mixture solvent is not particularly limited if the film-forming solution is homogeneous. Generally, the swelling agent content is selected to be in a range of from 1 % by weight to 50 % by weight.

Generally, the concentration of polysulfone in the film-forming solution is preferably selected to be in a range of from 10 % by weight to 30 % by weight. If the concentration of polysulfone is higher than 30 % by weight, the water permeability of the obtained porous separation membrane is of no practical use. If the concentration of polysulfone is lower than 10 % by weight, the mechanical strength of the obtained porous separation membrane is so poor that a sufficient back pressure strength cannot be obtained.

Then, a film is formed from the film-forming solution on an unwoven fabric support. That is, a continuous film-forming apparatus is used so that the film-forming solution is applied on a surface of a support sheet of unwoven fabric or the like while the support sheet is fed out successively. As an application method, the film-forming solution is applied on the unwoven fabric support by use of a gap coater such as a knife coater or a roll coater. When, for example, a roll coater is used, the separation membrane 42 can be formed as follows. That is, while the film-forming solution is stored between two rolls, the film-forming solution is applied on the unwoven fabric support and, at the same time, the inside of the unwoven fabric is sufficiently impregnated with the film-forming solution. Then, the unwoven fabric support is passed through a low humidity atmosphere so that a small amount of water in the atmosphere is absorbed to a surface of a liquid film applied on the unwoven fabric to thereby cause microphase separation in the surface layer of the liquid film. Then, the unwoven fabric support is immersed in a solidifying water tank so that the whole liquid film is phase-separated and solidified. Then, the solvent is washed away in a water washing tank. In this manner, the separation membrane 42 is formed.

When the separation membrane 42 formed as described above is used in each spiral membrane element 10 in the membrane separation systems 100, 200 and 300 according to the first, second and third embodiments, the back pressure strength of the separation membrane 42 is so high that the separation membrane 42 can be prevented from being broken even in the case where the spiral membrane element 10 is back-washed under a back pressure of 0.05 MPa to 0.3 MPa.

### Examples

### (Example 1)

In Example 1, the membrane separation system 100 according to the first embodiment shown in Fig. 1 was used to be subjected to a continuous water-pass filtration test. The specification of the spiral membrane element provided in each of the spiral membrane module and the reverse osmosis membrane separation device used in Example 1 was shown in Table 1 as follows.

**Table 1**

| | | |
|---|---|---|
| Target Device | Raw Water Separation Device | Reverse Osmosis Membrane Separation Device |
| Shape | Spiral | Spiral |
| Material | Polyvinylidene fluoride | Fully aromatic crosslinked polyamide |
| Size | Diameter: 200 mm Length: 1016 mm | Diameter: 200 mm Length: 1016 mm |
| Membrane Area | 30 m² | 28 m² |

The continuous water-pass filtration test was performed in the following condition and procedure for the purpose of measuring the recovery rate of permeate 3 to raw water 1. The condition at the time of filtration was as shown in Table 2 as follows.

**Table 2**

| | |
|---|---|
| Permeation speed of spiral membrane element | 2 m³/m²/day |
| Back washing interval | 20 minutes |
| Back washing time | 20 seconds |
| Continuous operating time | 180 days |
| Flushing washing time | 30 seconds |

At the time of back washing, the concentrate 4 was supplied to each membrane surface in the spiral membrane element 10 at a flow rate of 60 L/min. At the time of flushing washing, the raw water 1 was supplied to each membrane surface in the spiral membrane element 10 at a flow rate of 90 L/min.

As a result of the continuous water-pass filtration test based on the aforementioned condition, the recovery rate of permeate 3 to raw water 1 was 60 %.

### (Example 2)

In Example 2, the membrane separation system 200 according to the second embodiment shown in Fig. 4 was used to be subjected to a continuous water-pass filtration test. The specification of the spiral membrane element provided in each of the spiral membrane modules and the reverse osmosis membrane separation device used in Example 2 was the same as shown in Table 1 in Example 1.

The continuous water-pass filtration test was performed in the following condition and procedure for the purpose of measuring the recovery rate of permeate 3 to raw water 1. The condition at the time of filtration was the same as shown in Table 2 in Example 1. In Example 2, however, the plurality of spiral membrane modules provided in the membrane separation system 200 were washed successively.

At the time of back washing, the concentrate 4 was supplied to each membrane surface in the spiral membrane element 10 at a flow rate of 60 L/min. At the time of flushing washing, the raw water 1 was supplied to each membrane surface in the spiral membrane element 10 at a flow rate of 90 L/min.

As a result of the continuous water-pass filtration test based on the aforementioned condition, the recovery rate of permeate 3 to raw water 1 was 60 %.

### (Example 3)

In Example 3, the membrane separation system 300 according to the third embodiment shown in Fig. 5 was used to be subjected to a continuous water-pass filtration test. The specification of the spiral membrane element provided in each of the spiral membrane modules and the reverse osmosis membrane separation device used in Example 3 was the same as shown in. Table 1 in Example 1.

The continuous water-pass filtration test was performed in the following condition and procedure for the purpose of measuring the recovery rate of permeate 3 to raw water 1. The condition at the. time of filtration was the same as shown in Table 2 in Example 1. In Example 3, however, the plurality of spiral membrane modules provided in the membrane separation system 300 were: washed successively.

At the time of back washing, the concentrate 4 was supplied to each membrane surface in the spiral membrane element 10 at a flow rate of 60 L/min. At the time of flushing washing, the raw water 1 was supplied to each membrane surface in the spiral membrane element 10 at a flow rate of 90 L/min.

As a result of the continuous water-pass filtration test based on the aforementioned condition, the recovery rate of permeate 3 to raw water 1 was 60 %.

### (Comparative Example 1)

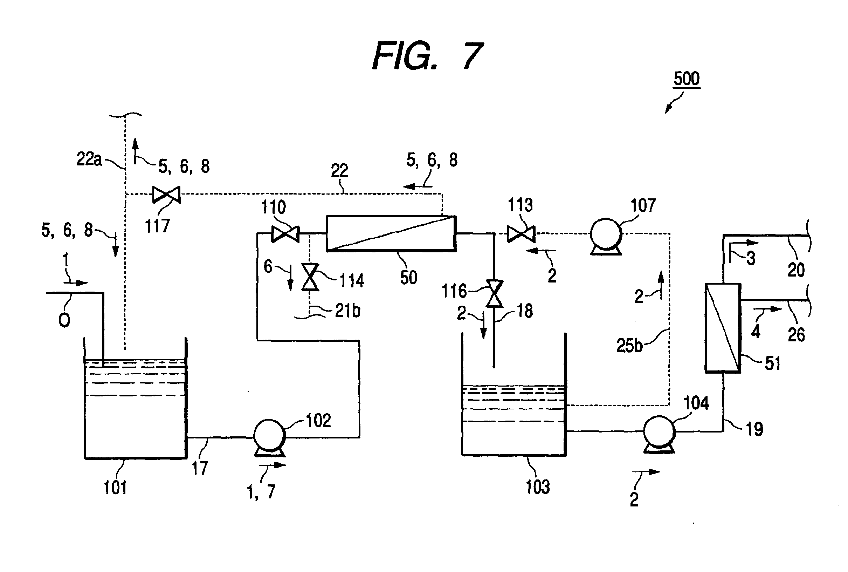

In Comparative Example 1 for comparison with Example 1, a membrane separation system shown in Fig. 7 was used to be subjected to a continuous water-pass filtration test.

Fig. 7 is a typical configuration diagram showing the membrane separation system used in Comparative Example 1.

The membrane separation system 500 shown in Fig. 7 has a structure different from that of the membrane separation system 100 shown in Fig. 1 in the following point.

In the membrane separation system 500, each membrane surface in the spiral membrane module 50 is washed with pre-treated water 2 filtrated by the spiral membrane module 50. Therefore, a pipe 19 for supplying the pre-treated water 2 to the reverse osmosis membrane separation device 51 and a pipe 25b for supplying the pre-treated water 2 to the spiral membrane module 50 are separately provided in a reservoir tank 103. Further, a supply pump 107 is provided in the pipe 25b. Further, a pipe 20 for supplying the permeate 3 to the outside of the system and a pipe 26 for discharging the concentrate 4 to the outside of the system or to a reservoir tank 101 are provided in the reverse osmosis membrane separation device 51.

At the time of filtration by the membrane separation system 500 shown in Fig. 7, a valve 113 of the pipe 25b is closed and the supply pump 107 provided in the pipe 25b stops.

Raw water 1 is separated into concentrate 5 and pre-treated water 2 by the spiral membrane module 50. The pre-treated water 2 is stored in the reservoir tank 103. Then, the pre-treated water 2 stored in the reservoir tank 103 is led into the reverse osmosis membrane separation device 51 through the pipe 19 by the supply pump 104. The pre-treated water 2 led into the reverse osmosis membrane separation device 51 is separated into permeate 3 and concentrate 4. Here, the permeate 3 is supplied to the outside of the system through the pipe 20 whereas the concentrate 4 is discharged to the outside of the system through the pipe 26.

When the spiral membrane element 10 in the spiral membrane module 50 is.back washed, the valve 113 of the pipe 25b and the valve 114 of the pipe 21b are opened while the valve 116 of the pipe 18 and the valve 110 of the pipe .17 are closed. Further, the supply pump 107 in the pipe 25b is actuated and the supply pump 102 in the pipe 17 is stopped.

The opening/closing condition of the other valves and the actuating condition of the other pumps are the same as at the time of filtration by the spiral membrane element 10. Incidentally, in the case, washing water for back washing is pressurized by the supply pump 107. Hence, a back pressure higher than 0.05 MPa but not higher than 0.3 MPa is applied to each membrane surface in the spiral membrane element 10 as a subject of washing.

In this condition, the pre-treated water 2 stored in the reservoir tank 103 is led as washing water into the spiral membrane element 10 of the spiral membrane module 50 through the valve 113 of the pipe 25b by the supply pump 107, so that back washing is performed.

When flushing washing is performed, the raw water 1 stored in the reservoir tank 101 is used as flushing washing water 7. That is, the flushing washing water 7 stored in the reservoir tank 101 is led into the spiral membrane module 50 by the supply pump 102 in the pipe 17, so that flushing washing is performed.

In Comparative Example 1, the membrane separation system 500 shown in Fig. 7 was used to be subjected to a continuous water-pass filtration test. The specification of the spiral membrane element provided in each of the spiral membrane modules and the.reverse osmosis membrane separation device used in Comparative Example 1 was the same as shown in Table 1 in Example 1.

The continuous water-pass filtration test was performed in the following condition and procedure for the purpose of measuring the recovery rate of permeate 3 to raw water 1. The condition at the time of filtration was the same as shown in Table 2 in Example 1.

At the time of back washing, the concentrate 4 was supplied to each membrane surface in the spiral membrane element 10 at a flow rate of 60 L/min. At the time of flushing washing, the raw water 1 was supplied to each membrane surface in the spiral membrane'element 10 at a flow rate of 90 L/min.

As a result of the continuous water-pass filtration test based on the aforementioned condition, the recovery rate of permeate 3 to raw water 1 was 54 %.

### (Comparative Example 2)

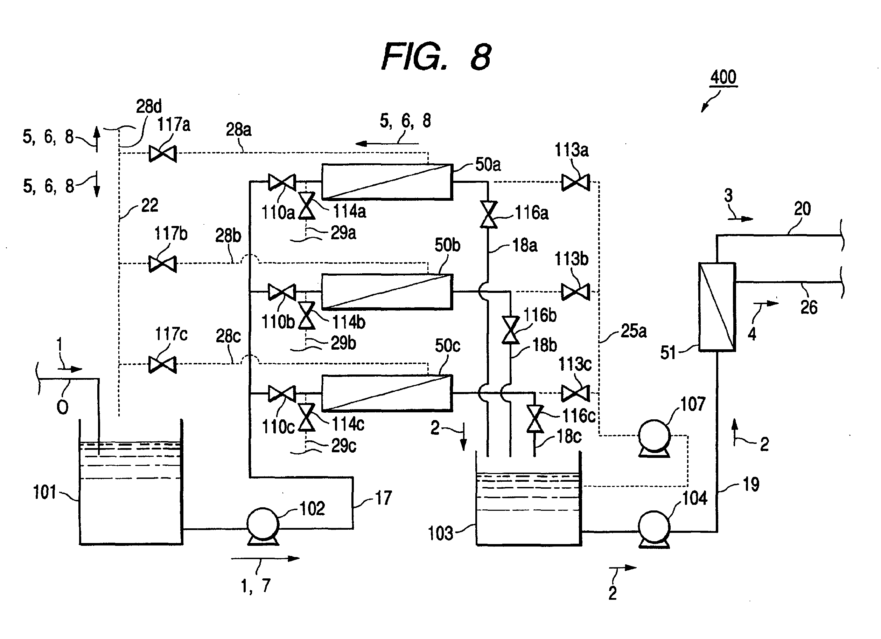

In Comparative Example 2 for comparison with Examples 2 and 3, a membrane separation system shown in Fig. 8 was used to be subjected to a continuous water-pass filtration test.

Fig. 8 is a typical configuration diagram showing the membrane separation system used in Comparative Example 2.

The membrane separation system 400 shown in Fig. 8 has a structure different from that of the membrane separation system 200 shown in Fig. 4 in the following point.

In the membrane separation system 400, each membrane surface in the spiral membrane modules 50a, 50b and 50c is washed with pre-treated water 2 filtrated by the spiral membrane modules 50a, 50b and 50c. Therefore, a pipe 19 for supplying the pre-treated water 2 to the reverse osmosis membrane separation device 51 and a pipe 25a for supplying the pre-treated water 2 to the spiral membrane modules 50a, 50b and 50c are separately provided in a reservoir tank 103. Further, a supply pump 107 is provided in the pipe 25a. Further, a pipe 20 for supplying the permeate 3 to the outside of the system and a pipe 26 for discharging the concentrate 4 to the outside of the system or to a reservoir tank 101 are provided in the reverse osmosis membrane separation device 51.

At the time of filtration by the membrane separation system 400 shown in Fig. 8, valves 113a, 113b and 113c of the pipe 25a are closed and the supply pump 107 provided in the pipe 25a stops.

Raw water 1 is separated into concentrate 5 and pre-treated water 2 by the spiral membrane modules 50a, 50b and 50c. The pre-treated water 2 is stored in the reservoir tank 103. Then, the pre-treated water 2 stored in the reservoir tank 103 is led into the reverse osmosis membrane separation device 51 through the pipe 19 by the supply pump 104. The pre-treated water 2 led into the reverse osmosis membrane separation device 51 is separated into permeate 3 and concentrate 4. Here, the permeate 3 is supplied to the outside of the system through the pipe 20 whereas the concentrate 4 is discharged to the outside of the system through the pipe 26.

In the membrane separation system 400, the spiral membrane modules 50a, 50b and 50c are back-washed successively in the same manner as in Example 2.

when the spiral membrane element 10 in the spiral membrane module 50a is back washed, the valve 113a of the pipe 25a and the valve 114a of the pipe 29a are opened while the valve 116a of the pipe 18a and the valve 110a of the pipe 17 are closed. Further, the supply pump 107 in the pipe 25a is actuated.

The opening/closing condition of the other valves and the actuating condition of the other pumps are the same as at the time of filtration by the spiral membrane modules 50a, 50b and 50c. Incidentally, in the case, washing water for back washing is pressurized by the supply pump 107. Hence, a back pressure higher than 0.05 MPa but not higher than 0.3 MPa is applied to each membrane surface in the spiral membrane element 10 as a subject of washing.

In this condition, the pre-treated water 2 stored in the reservoir tank 103 is led as washing water into the spiral membrane element 10 of the spiral membrane module 50a through the valve 113a of the pipe 25a by the supply pump 107, so that back washing is performed. Further, back washing of the spiral membrane element 10 in each of the spiral membrane modules 50b and 50c is performed in the same manner as back washing of the spiral membrane element 10 of the spiral membrane module 50a.

When flushing washing is performed, the raw water 1 stored in the reservoir tank 101 is used as flushing.washing water 7.

In flushing washing, the three spiral membrane elements can be washed individually in the condition that any of the valves 110a, 110b and 110c in the pipe 17 is closed. Assume now that the spiral membrane modules 50a, 50b and 50c are washed simultaneously.

The raw water 1 stored in the reservoir tank 101 is led as flushing washing water 7 into the spiral membrane modules 50a, 50b and 50c by the supply pump 102 in the pipe 17, so that flushing washing is performed.

In Comparative Example 2, the membrane separation system 400 shown in Fig. 8 was used to be subjected to a continuous water-pass filtration test. The specification of the spiral membrane element provided in each of the spiral membrane modules and the reverse osmosis membrane separation device used in Comparative Example 2 was the same as shown in Table 1 in Example 1.

The continuous water-pass filtration test was performed in the following condition and procedure for the purpose of measuring the recovery rate of permeate 3 to raw water 1. The condition at the time of filtration was the same as shown in Table 2 in Example 1. In Comparative Example 2, however, the plurality of spiral membrane modules provided in the membrane separation system 400 were washed successively.

At the time of back washing, the concentrate 4 was supplied to each membrane surface in the spiral membrane element 10 at a flow rate of 60 L/min. At the time of flushing washing, the raw water 1 was supplied to each membrane surface in the spiral membrane element 10 at a flow rate of 90 L/min.

As a result of the continuous water-pass filtration test based on the aforementioned condition, the recovery rate of permeate 3 to raw water 1 was 54 %.

### (Evaluation)

In Example 1 in which the concentrate obtained by the reverse osmosis membrane separation device was used as washing water, the recovery rate was improved compared with Comparative Example 1 in which pre-treated water was used as washing water. In Examples 2 and 3 in which the concentrate obtained by the reverse osmosis membrane separation device was used as washing water, the recovery rate was improved compared with Comparative Example 2 in which pre-treated water was used as washing water.

## Claims

1. A treatment system comprising:
a spiral membrane element including a porous hollow tube, and an envelope-like separation membrane wound on an outer circumferential surface of said porous hollow tube, said spiral membrane element capable of being back-washed under a back pressure higher than 0.05 MPa but not higher than 0.3 MPa;
a reverse osmosis membrane separation device provided on a downstream side of said spiral membrane element; and
a washing liquid supply system provided so that at least apart of permeated liquid or concentrated liquid obtained from said reverse osmosis membrane separation device at the time of filtration by said spiral membrane element is supplied as washing liquid to said spiral membrane element at the time of washing said spiral membrane element.

2. A treatment system according to Claim 1, wherein said washing includes back washing, which is performed by said washing liquid supply system so that at least a part of said permeated liquid or concentrated liquid ejected from said reverse osmosis membrane separation device is supplied to said spiral membrane element under a pressure higher than 0.05 MPa but not higher than 0.3 MPa.

3. A treatment system according to Claim 1, wherein said ' washing includes flushing washing, which is performed by said washing liquid supply system so that at least a part of said permeated liquid or concentrated liquid ejected from said reverse osmosis membrane separation device is supplied to said spiral membrane element at the time of filtration by said spiral membrane element.

4. A treatment system according to Claim 1, wherein said washing liquid supply system is provided so that at least a part of said permeated liquid or concentrated liquid ejected from said reverse osmosis membrane separation device is supplied, together with chemicals, to said spiral membrane element.

5. A treatment system according to Claim 1, wherein said concentrated liquid or permeated liquid ejected from said reverse osmosis membrane separation device has a residual pressure higher than 0.05 MPa but not higher than 0.3 MPa, so that said washing liquid supply system supplies at least a part of said concentrated liquid or permeated liquid to said spiral membrane element under said residual pressure at the time of said washing.

6. A treatment system according to Claim 1, wherein:
a plurality of spiral membrane elements as defined in Claim 1 are provided in parallel with one another, said spiral membrane elements being washed successively so that while one of said spiral membrane elements is washed, at least one.of the other spiral membrane elements is operated for filtration; and
said washing liquid supply system is provided so that at least a part of permeated liquid or concentrated liquid obtained from said reverse osmosis membrane separation device at the time of filtration by the plurality of spiral membrane elements is supplied as washing liquid to each spiral membrane element at the time of washing said spiral membrane element.

7. A method of operating a treatment system including a spiral membrane element, and a reverse osmosis membrane separation device provided on a downstream side of said spiral membrane element, said spiral membrane element having a porous hollow tube, and an envelope-like separation membrane wound on an outer circumferential surface of said porous hollow tube, said spiral membrane element capable of being back-washed under a back pressure higher than 0.05 MPa but not higher than 0.3 MPa, said method comprising the step of:
supplying at least a part of permeated liquid or concentrated liquid obtained from said reverse osmosis membrane separation device at the time of filtration by said spiral membrane element, as washing liquid, to said spiral membrane element at the time of washing said spiral membrane element.

8. A method of operating a treatment system according to Claim 7, wherein said washing includes back washing, which is performed so that at least a part of said permeated liquid or concentrated liquid ejected from said reverse osmosis membrane separation device is supplied to said spiral membrane element under a pressure higher than 0.05 MPa but not higher than 0.3 MPa.

9. A method of operating a treatment system according to Claim 7, wherein said washing includes flushing washing, which is performed so that at least a part of said permeated liquid or concentrated liquid ejected from said reverse osmosis . membrane separation device is supplied to said spiral membrane element at the time of filtration by said spiral membrane element.

10. A method of operating a treatment system according to Claim 7, wherein at least a part of said permeated liquid or concentrated liquid ejected from said reverse osmosis membrane separation device is supplied, together with chemicals, to said spiral membrane element.

11. A method of operating a treatment system according to Claim 7, wherein said concentrated liquid or permeated liquid ejected from said reverse osmosis membrane separation device has a residual pressure higher than 0.05 MPa but not higher than 0.3 MPa, so that at least a part of said concentrated liquid or permeated liquid is supplied to said spiral membrane element under said residual pressure at the time of said washing.

12. A method of operating a treatment system, wherein:
a plurality of spiral membrane elements as defined in Claim 7 are provided in parallel with one another, said spiral membrane elements being washed successively so that while one of said spiral membrane elements is washed, at least one of. the other spiral membrane elements is operated for filtration; and
at least a part of permeated liquid or concentrated liquid obtained from said reverse osmosis membrane separation device at the time of filtration by the plurality of spiral membrane elements is supplied as washing liquid to each spiral membrane element at the time of washing said spiral membrane element.
